**Europäisches Patentamt**

**European Patent Office**

**Office européen des brevets**

(19)

(11) Publication number: **0 156 605**

**A2**

(12) **EUROPEAN PATENT APPLICATION**

(21) Application number: **85301824.0**

(22) Date of filing: **15.03.85**

(51) Int. Cl.⁴: **G 01 N 1/06**
**F 16 C 11/04**

(30) Priority: **23.03.84 DE 3410831**

(43) Date of publication of application:
**02.10.85 Bulletin 85/40**

(84) Designated Contracting States:
**AT FR GB SE**

(71) Applicant: **C. Reichert Optische Werke AG**
**P.O. Box 95 Hernalser Hauptstrasse 219**
**A-1170 Vienna(AT)**

(72) Inventor: **Sitte, Hellmuth**
**Reitherspitzstrasse 166**
**A-6100 Siefeld/Tirol(AT)**

(72) Inventor: **Kleber, Heinrich**
**Roggegasse 50**
**A-1210 Wien(AT)**

(74) Representative: **Coxon, Philip et al,**
**Eric Potter & Clarkson 14 Oxford Street**
**Nottingham NG1 5BP(GB)**

(54) Precision bearing for a microtome.

(57) In a precision bearing for a microtome, especially for an ultra microtome, comprising two bearing components having corresponding complementary spherical surfaces with identical or only slightly different radii of curvature and which are urged together and articulated with respect to one another, at least one bearing component consists of an amorphous material, for example glass, to reduce friction and wear in the bearing.

EP 0 156 605 A2

Croydon Printing Company Ltd.

## PRECISION BEARING FOR A MICROTOME

This invention relates to a precision bearing for a microtome, and especially for an ultra-microtome. The bearing is of the kind having two bearing components having corresponding complementary surfaces and which are urged together and movable with respect to one another.

A bearing for a microtome is described in U.S. Patent No. 4,221,438. In this specification a bearing is disclosed comprising one member having a plurality of spherical elements connected thereto, and another member having adjustable sockets which co-operate with the spherical elements to permit rotation about a single axis.

When using a microtome, and especially an ultra-microtome, to make very thin sections between 10nm and 1μm thick, a critical factor determining the quality of the cut obtained is that during relative movement of the specimen in relation to the knife the guidance of the moving part should be as uniform and accurate as possible. Such uniform and accurate mechanical guidance must be maintained particularly during exertion of the cutting forces required for separating the sections. When hard natural and synthetic materials are cut, or during the cutting of specimens embedded in hard synthetic materials and which are cut over areas of more than $1mm^2$, the cutting forces can considerably exceed 100p. Consequently, these requirements can only be met by bearings which are adapted to this special purpose by being made very rigid. Although leaf-spring bearings provide the highest precision and prevent any friction between bearing components moved relative to one another, nevertheless they do not have the rigidity required to withstand cutting forces of more than 100p. On the other hand, spherical, cylindrical or plane bearing surfaces allow very rigid guidance of the particular moving parts, but tend to exhibit "stick-slip" behaviour in the case of pre-stressed bearing elements having small contact surfaces of about $10mm^2$. Although "stick-slip" behaviour can generally be prevented by using larger contact surfaces of more than $10mm^2$, the cutting thicknesses then become unreproducible when the pre-stresses are the same, due to the thickness and extent of the lubricant film. Presumably, "stick-slip" behaviour arises because of friction between the materials of the two corresponding bearing surfaces, which can no longer be protected by the extremely thin lubricant film. In the case of the crystalline metal or mineral bearing materials used exclusively hitherto (for example bronze, brass, steel, sintered metal, ruby, agate and sapphire), this phenomenon very soon leads to material abrasion of the bearing surfaces and finally to wear and damage of the bearings. Overall, the performance of bearings of this type in microtomes, and especially in ultra-microtomes, remains unsatisfactory at high cutting forces, which cause correspondingly high forces in the bearing. Synthetic materials do not give the desired performance because plastic polymers do not have sufficient dimensional stability to guarantee that maximum precision will be achieved.

The object of the present invention is accordingly to provide a bearing having two corresponding complementary surfaces urged together and which does not have the abovementioned disadvantages without increasing production costs or making the construction more complicated.

According to the present invention there is provided a precision bearing for a microtome, comprising a first bearing component, a second bearing component, said first and second bearing components being provided with corresponding complementary surface portions, and said surface portions being urged into engagement with one another, said first and second bearing components being movable relative to one another, and at least one of said surface portions being made of an amorphous material.

The complementary surface portions are usually spherical.

If only one of the two complementary spherical surface portions is of amorphous material, the other may be made of a conventional crystalline material, for example hardened steel. For example, an optically ground glass cup can receive a precision ball made of metal, such as hardened steel, with a radius that is identical or approximately the same as the radius of the surface of the cup. Tests show that contrary to all expectations, with normal lubrication and normal bearing forces (for example the prestressing of the two corresponding spherical surface portions relative to one another by means of springs), an arrangement of this type gives rise to no abrasion of metal to change the lubricating properties of the grease and the friction between the two bearing components during relative movement thereof and to lead to wear in the bearing. Similarly, no abrasion of glass is observed.

Bearings in which a metal cup receives an optically ground glass surface behave in a similar way. Bearing elements in which both bearing components consist of an amorphous material, i.e. both the cup and the ball, behave in the same manner.

In all these cases, production of the bearings is no more complicated than the corresponding production of bearing components from crystalline metal or mineral materials. On the contrary, especially when glass is used as the bearing material, production is considerably simpler, because of the transparency of the material used, when optical grinding and interferometric measuring methods can be employed.

By the elimination of wear, not only can a practically unlimited service life of the bearing components be achieved, but also considerably higher precision and cutting quality, because the "stick-slip" behaviour which gives rise to the wear in conventional bearings is absent in the bearing according to the present invention from the time it is first put to use.

Further advantages and features of the invention will be apparent from the following description of a known bearing arrangement and two embodiments of the present invention.

Figure 1 shows a diagrammatic side view of a known rocking-bar microtome as disclosed in German Offenlegungsschrift 2,738,240;

Figure 2a shows the bearing arrangement for the microtome of Figure 1;

Figure 2b is a view on lines II-II of Figure 2a;

Figure 3 illustrates phenomena which arise on the bearing components of Figures 2a and 2b when exclusively crystalline materials are used for the corresponding bearing surfaces; and

Figures 4a and 4b show two preferred embodiments of a precision bearing according to the present invention.

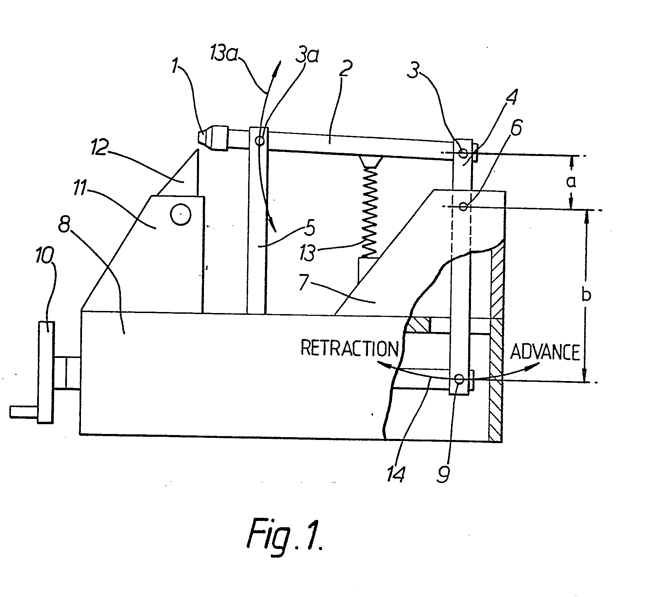

Figure 1 shows a conventional ultra-microtome. A specimen 1 is fixed on a rocking specimen-carrier bar 2 which is pivoted at one end to a lever 4 by means of a bearing 3 and adjacent its other end to a lever 5 on a bearing 3a. The lever 4 is mounted to a bearing 6 in a support 7 arranged on a base 8 of the microtome stand and can be pivoted directly or indirectly at a pivot 9 to an element of the microtome mechanism (for example, the micrometer spindle, cam disc or the like).

The ultra-microtome is provided with a handwheel 10 which can be rotated to drive the microtome mechanism which is installed in the base and which is not described in any further detail herein. This causes the lever 5 to move up and down in a known manner. Alternatively the microtome mechanism can be driven by a motor (not shown).

As a result of this drive the specimen-carrier bar 2, together with the specimen 1, pivots in the direction of the double arrow 13a. In addition, also in a conventional manner, the microtome mechanism can move the end of the lever 4 which is pivotted at pivot 9, for example in the directions indicated by the double arrow 14. This movement of the lever 4 results in the lever 4 pivoting about the bearing 6 and thereby advancing or retracting the bar 2 and the specimen 1 in relation to a cutting knife 12 fixed in a holder 11. This pivoting movement is reduced in the ratio of the distances a/b shown in Figure 1. To achieve high precision, all the bearings and connections are kept free of play by means of spring tension, for example by means of spring 13.

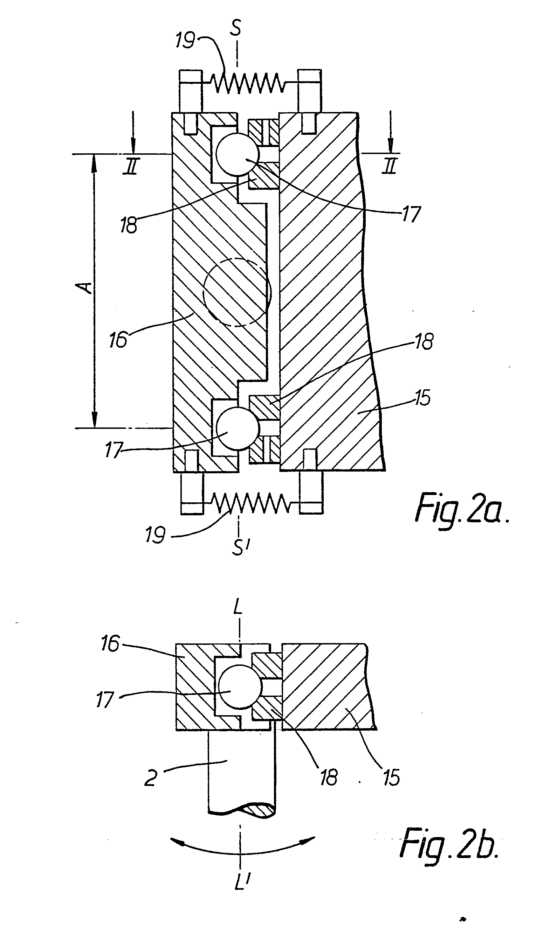

Figures 2a and 2b show a known bearing arrangement. Two bearing components 15 and 16 are articulated with respect to one another by means of two balls 17 and two cup-shaped bearing recesses formed in elements 18. The balls 17 are glued into the bearing component 16, while the elements 18 with the bearing recesses are glued to the component 15. The two bearing components 15 and 16 are connected by urging means in the form of symmetrically arranged tension springs 19 which urge the balls 17 into the recesses of the elements 18.

The specimen-carrier bar 2 is mounted rigidly on the bearing component 16. The specimen-carrier bar 2 has a longitudinal axis LL' which intersects a pivot axis SS' of the bearing; the pivot axis SS' runs through the centres of the two balls 17.

The separation A between the corresponding bearing elements 17 and 18 are exactly equal. This can be achieved by making one of the four adhesive connections between the bearing component 15 and the elements 18 and between the bearing component 16 and the balls 17 after the other three connections have been made and the adhesive for these three connections has hardened. In this way the position of the last connection can be adjusted to the precise position before the adhesive hardens. This would normally be achieved automatically under the influence of for example, the springs 19 which move the connection to the correct position. Until the last adhesive connection has hardened, the entire bearing arrangement remains non-positively connected, being urged together by for example tension springs 19. This is described in our U.S. Patent No. 4,221,438.

To ensure that the corresponding complementary spherical surfaces of the elements 17 and 18 are urged into contact, as is always necessary, the two springs 19 must have tensions of at least 1kp. In bearings of this type, this results in bearing pressures of the order of approximately $1kp/cm^2$ on the spherical surfaces contacting one another. When the elements 17 and 18 are made of metal or mineral materials, as has previously exclusively been the case, these bearing pressures lead to breakdown of the lubricant film and to friction between the metal bearing surfaces at the necessary low angular speeds relative to one another of the corresponding complementary spherical surfaces. Such speeds are in the range between 0.02 and 2 degrees of angle per second.

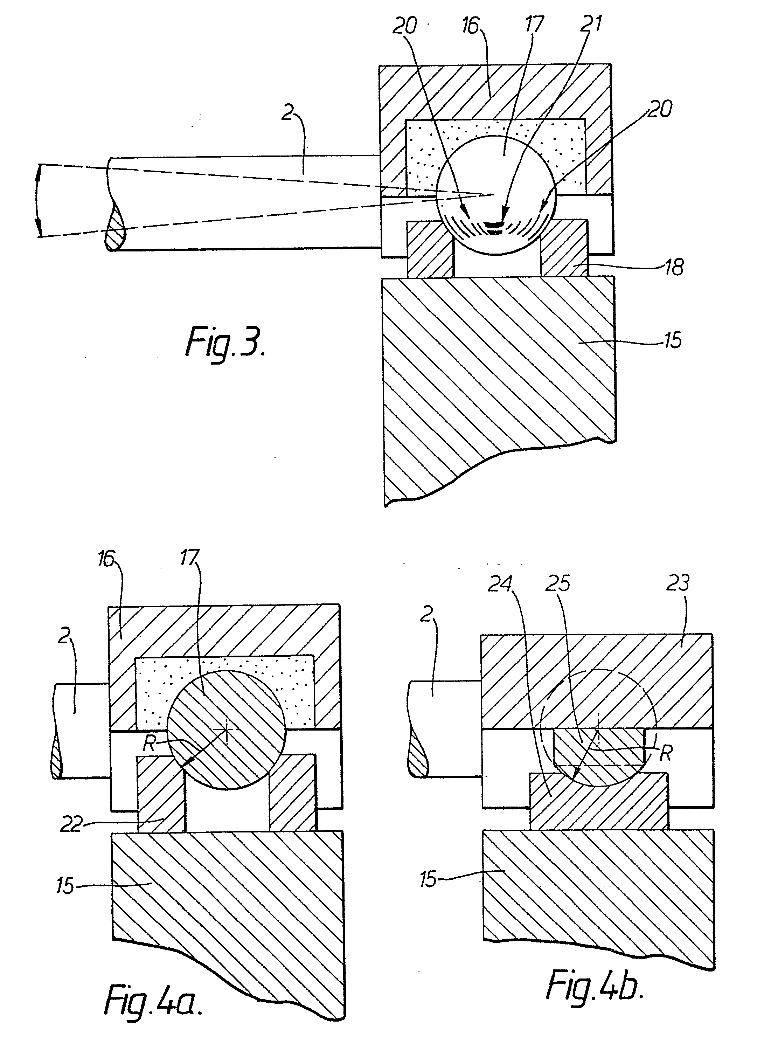

Within a short time the spherical surfaces, which were originally polished with a high gloss, acquire markings which, as shown in Figure 3, lead to scores 20. These scores 20 accurately reflect the extent of the relative movement. Furthermore, in the region of the balls 17 moving at the minimum angular speeds, i.e. in the vicinity of the axis of rotation SS'(Figure 2a), there is frequently a deposit of the softer material on the harder material, for example a plating deposit 21 consisting of material from brass cups 18 on the surface of a hardened steel ball 17. Finally, as a result of material abrasion, the lubricant used acquires very quickly a black colour and shows particulate inclusions of varying size.

These problems result in the bearings being subjected to frictional forces such that it is no longer possible to execute perfect cuts with the instrument. To a greater or lesser extent there is always some vibration and/or irregularity in the cutting thickness which either make the results of the cuts useless or at least reduce their value considerably. Furthermore, since the friction between the bearing elements arises as early as the first use of instruments of this type, optimum performance can only be achieved with such instruments when they are first used, if at all. Thereafter, the quality of the cuts deteriorates very rapidly and continuously.

Contrary to all expectations, a solution is possible. As shown in Figure 4a, the metal or mineral cup 18 is simply replaced by a cup 22 ground in the same way and made of amorphous material, for example by a cup consisting of appropriately ground glass. Under conditions which are otherwise identical, even when a ground hardened bearing ball 17 made of steel is used, the steel ball 17 causes no abrasion. "Stick-slip" behaviour is prevented, and even in hard continuous use the bearing has been found to operate without noticeable wear and with a precision and quietness of movement which cannot be achieved when the elements 18 and the balls 17 are made of crystalline material.

The invention can be put into practice in different ways. For example, as shown in Figure 4b, two amorphous bearing elements 24 and 25 are used. The bearing element 24 comprises a cup and is fixed to the support 15 and is provided with a recess, in the form of a hollow spherical segment, which corresponds to a spherical segment of the bearing component 25; the component 25 is in turn affixed to an element 23 which supports the specimen-carrier bar 2.

The invention can clearly be put into effect in other ways than in the embodiments illustrated by way of example in Figures 4a and 4b. In accordance with the present invention, it is sufficient to use at least one bearing component made of amorphous material and having a ground spherical surface which corresponds to a complementary ground spherical surface made of any other material suitable for the purpose.

The interacting complementary surfaces have radii of curvature R which are either identical or which differ only slightly from one another. The radii of curvature may, for example, differ from one another by up to about 5μm. This can be achieved by means of optical grinding.

CLAIMS

1.  A precision bearing for a microtome, comprising

a first bearing component,

a second bearing component,

said first and second bearing components being provided with corresponding complementary surface portions, and

said surface portions being urged into engagement with one another,

said first and second bearing components being movable relative to one another, and

at least one of said surface portions being made of an amorphous material.

2.  A precision bearing according to Claim 1, wherein both of said surface portions are made of an amorphous material.

3.  A precision bearing according to Claim 1, wherein the amorphous material is glass.

4.  A precision bearing according to any preceding claim, wherein said surface portions are spherical and have radii of curvature which differ from one another by up to about 5μm.

5.  A precison bearing according to Claim 1, wherein the said surface portions are optically ground.

*Fig.1.*

0156605

Fig.2a.

Fig.2b.

Q156605

**Fig.3.**

**Fig.4a.**

**Fig.4b.**